# EUROPÄISCHE PATENTSCHRIFT

(11) **EP 1 973 450 B1**
(45) Veröffentlichungstag und Bekanntmachung des Hinweises auf die Patenterteilung: **21.04.2010**
(21) Anmeldenummer: 06700562.9
(22) Anmeldetag: 20.01.2006
(51) Int. Cl.: A47J 31/06

(54) **FILTEREINSATZ**
FILTER INSERT
GARNITURE DE FILTRE

(43) Veröffentlichungstag der Anmeldung: 01.10.2008
(73) Patentinhaber: PI-DESIGN AG, 6234 Triengen (CH)
(72) Erfinder: BODUM, Jørgen, CH-6045 Meggen (CH)
(74) Vertreter: Detken, Andreas
(86) Internationale Anmeldenummer: PCT/CH2006/000044
(87) Internationale Veröffentlichungsnummer: WO 2007/082391

(56) Entgegenhaltungen:
- EP-A- 1 260 165
- DE-U1- 8 900 513
- US-A- 2 788 733
- PATENT ABSTRACTS OF JAPAN Bd. 2000, Nr. 01, 31. Januar 2000 (2000-01-31) & JP 11 290214 A (DOUTOR COFFEE CO LTD), 26. Oktober 1999 (1999-10-26)

## Beschreibung

### Technisches Gebiet der Erfindung

Die vorliegende Erfindung betrifft einen Filtereinsatz zum Einsetzen in eine Einsatzöffnung eines Gefässes zwecks Extraktion von Getränken gemäss Oberbegriff des Patentanspruchs 1 sowie ein Gefäss mit einem Filtereinsatz gemäss Oberbegriff des Patentanspruchs 11. Der Filtereinsatz eignet sich insbesondere zur Zubereitung von Kaffee und Tee.

### Stand der Technik

Zur Zubereitung von Getränken werden die unterschiedlichsten Filtereinsätze verwendet.

DE-A-2'136'580 offenbart beispielsweise eine Vorrichtung zum Aufgiessen und Filtern von Getränken mit Rückständen. Der Filtereinsatz wird hier durch eine in die Kannenöffnung einsetzbare federnde Halterung und eine durch diese Halterung festklemmbare Einweg-Einlage gebildet. Die Halterung ist dabei stabförmig ausgestaltet und weist eine Druckfeder auf. Der Vorgang des Einsetzens ist eher umständlich, denn es müssen sowohl die Halterung als auch die Einweg-Einlage eingesetzt werden. Ebenfalls nachteilig ist, dass Einweg-Einlagen verwendet werden müssen.

EP-A-0'467'013 offenbart eine Teefiltervorrichtung, bei welcher ein Papierfilterbeutel mittels zwei gegenüberliegenden Spannsegmenten gehalten wird. Die beiden Spannsegmente sind parallel zueinander beweglich. Auch hier werden somit Einweg-Filterbeutel eingesetzt. Die Teefiltervorrichtung kann einem Gefäss, beispielsweise einem Krug, aufgesetzt werden. Wird nun der Krug beim Einschenken des Getränks geschwenkt, so kann es vorkommen, dass sich die Teefiltervorrichtung löst und aus dem Krug herausfällt.

Ferner sind Filtereinsätze bekannt, welche mehrfach verwendet werden können und keine Einwegprodukte benötigen. Diese Filtereinsätze bestehen üblicherweise aus Glas, Metall oder Kunststoff. WO 92/13475 offenbart einen solchen Filtereinsatz für Gefässe, wobei der Filtereinsatz mehrmals verwendbar ist. Der Filtereinsatz wird in das Gefäss eingesetzt und anschliessend kann heisses Wasser in das Gefäss zugefügt werden. Auch bei diesem Filtereinsatz ist es möglich, dass dieser während dem Einschenken des Getränkes aus dem Krug herausfallen kann.

Es ist zudem bekannt, derartige Filtereinsätze mit einem Aufsatz aus einem weichen Material zu versehen, wobei eine Art Krempe gebildet ist. Dabei kann dieser Filtereinsatz auf dem oberen Rand einer Kanne mittels der Krempe aufliegen. Auch diese Filtereinsätze weisen den Nachteil auf, dass sie beim Ausgiessen des Getränks aus dem Krug herausfallen können.

Ein Filtereinsatz wie im Oberbegriff des Patentanspruchs 1 ist in der US 2788733 A offenbart.

### Darstellung der Erfindung

Es ist deshalb eine Aufgabe der Erfindung, einen Filtereinsatz zu schaffen, welcher in einfacher Weise in einen Krug einsetzbar ist und beim Ausgiessen des Getränks des Kruges nicht herausfallen kann. Weiter soll der erfindungsgemässe Filtereinsatz möglichst universell einsetzbar sein.

Diese Aufgabe löst ein Filtereinsatz mit den Merkmalen des Patentanspruchs 1.

Der erfindungsgemässe Filtereinsatz zum Einsetzen in eine Einsatzöffnung eines Gefässes zwecks Extraktion von Getränken weist einen Grundkörper mit Filteröffnungen und eine Manschette auf. Die Manschette weist über einen Umfangsbereich eine elastische wellenförmige Aussenkontur auf. Die Aussenkontur dient zur flexiblen Anpassung an ein Innenmass der Einsatzöffnung des Gefässes. Diese wellenförmige Aussenkontur verhindert, dass der Filtereinsatz beim Ausgiessen des Getränkes herausfällt.

Vorteilhaft ist zudem, dass dieser Filtereinsatz in diversen Krügen universell einsetzbar ist. Ein weiterer Vorteil der wellenförmigen Aussenkontur ist, dass diese Fertigungstoleranzen ausgleichen kann. Dadurch müssen die entsprechenden Krüge nicht mehr so genau gefertigt werden und lassen sich somit kostengünstiger herstellen. Vorteilhaft ist ferner, dass durch die elastische Ausgestaltung der wellenförmigen Aussenkontur das Gefäss durch den Filtereinsatz nicht mehr beschädigt werden kann. Risse, Kratzer oder andere Beschädigungen des Gefässes können somit durch die Manschette verhindert werden.

Der erfindungsgemässe Filtereinsatz weist vorzugsweise einen mindestens teilweise umlaufenden Flansch auf. Der Flansch dient dazu, den Filtereinsatz im eingesetzten Zustand zu halten, damit dieser nicht in den Krug hineinfällt. Dabei ist ein oberer Bereich der Manschette Teil dieses Flansches.

Es ist eine weitere Aufgabe der Erfindung, einen Filtereinsatz zu schaffen, welcher auch im heissen Zustand mit blossen Händen aus dem Gefäss entfernt werden kann.

Diese Aufgabe löst ein Filtereinsatz mit den Merkmalen des Patentanspruchs 3.

Der Filtereinsatz nach Patentanspruch 3 weist einen Flansch auf. Der Flansch umfasst einen mindestens teilweise umlaufenden Ring. Die Manschette weist einen oberen Bereich auf, welcher sich über mindestens einen Teil eines äusseren Randes dieses Rings erstreckt. Der Umfangsbereich mit der wellenförmigen Aussenkontur ist unterhalb dieses oberen Bereichs angeordnet. Dies bringt den Vorteil, dass der Benutzer den Filtereinsatz mit blossen Händen aus dem Gefäss entfernen kann.

In einer bevorzugten Ausführungsform ist die Manschette einstückig und weist sowohl die wellenförmig Aussenkontur wie auch eine Isolierummantelung auf. Die Einstückigkeit bietet den Vorteil, dass diese kostengünstig herzustellen ist und einfach zu montieren ist. Zudem wird die Handhabung durch den Benutzer vereinfacht.

Weitere vorteilhafte Ausführungsformen gehen aus den Unteransprüchen hervor.

### Kurze Beschreibung der Zeichnung

Die Erfindung wird im folgenden anhand der Zeichnung näher beschrieben. Es zeigen:
- Fig. 1: einen Querschnitt einer Teekanne mit einem Filtereinsatz gemäss der vorliegenden Erfindung;
- Fig. 2: eine perspektivische Ansicht des Filtereinsatzes gemäss Figur 1;
- Fig. 3: einen Querschnitt des Filtereinsatzes gemäss Figur 1, entlang der Linie S3-S3 von Figur 4;
- Fig. 4: einen Querschnitt des Filtereinsatzes gemäss Figur 1, entlang der Linie S4-S4 von Figur 3; und
- Fig. 5: einen Querschnitt entlang der Linie S5-S5 des Filtereinsatzes gemäss Figuren 3 oder 4.
- Fig. 6: einen Querschnitt einer Teekanne mit einem Filtereinsatz gemäss einer weiteren Ausführungsform der vorliegenden Erfindung.

### Beschreibung eines Ausführungebeispiels

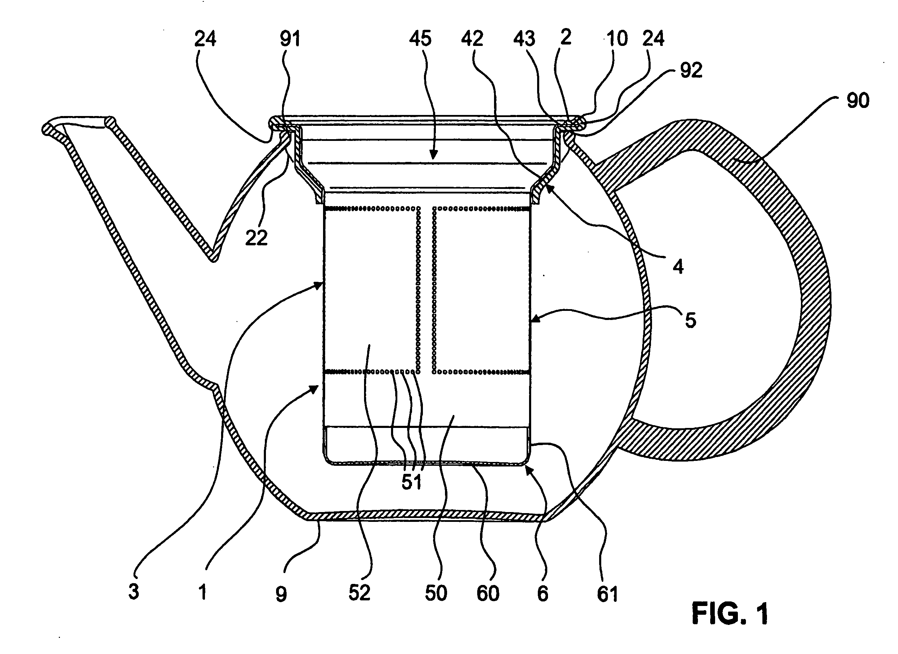

Figur 1 zeigt einen Filtereinsatz 1 gemäss einem bevorzugten Ausführungsbeispiel der vorliegenden Erfindung. Der Filtereinsatz 1 ist dabei in einem Gefäss 9, hier eine Kaffeekanne oder ein Teekrug, eingesetzt und kann zur Extraktion von Getränken, insbesondere Tee oder Kaffee verwendet werden. Der Filtereinsatz 1 umfasst im wesentlichen einen ein- oder mehrteiligen Grundkörper 3 mit Filteröffnungen 51 und eine Manschette 2, welche über einen Teil des Grundkörper 3 angeordnet ist.

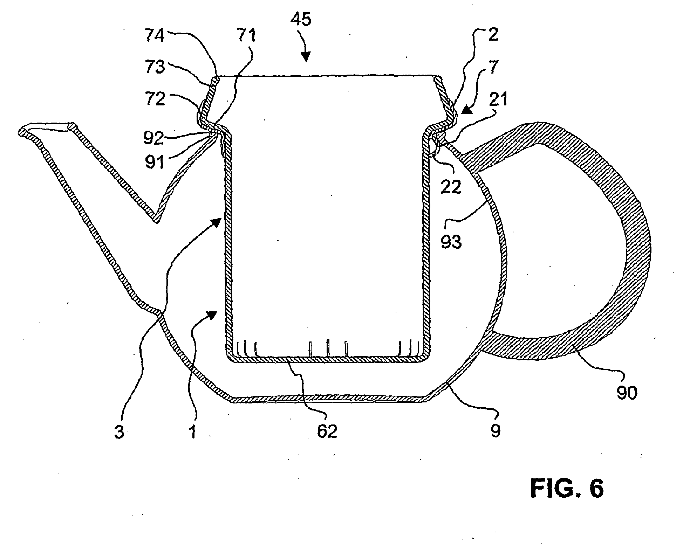

Der Grundkörper 3 lässt sich im wesentlichen in drei Bereiche unterteilen: einen oberen Auflagebereich 4 mit einem mindestens teilweise umlaufenden Flansch 10, einem mittleren hohlzylinderförmigen Filterbereich 5 mit einer Vielzahl von Filteröffnungen 51 und einem unteren Bodenbereich 6 mit einer Auffangschale 60. Wie hier dargestellt ist, lassen sich Auflagebereich 4, Filterbereich 5 und Bodenbereich 6 als getrennte Teile ausbilden, welche lösbar oder fest miteinander verbunden sind. Durch den Flansch 10, welcher sich vorzugsweise aus einem Auflagering 27 der Manschette 2 und einem mindestens teilweise umlaufenden Ring 44 des Auflagebereiches 4 bildet, liegt der Filtereinsatz 1 auf einem Öffnungsrand 92 auf. Dies verhindert, dass der Filtereinsatz in das Gefäss 9 fallen kann. Der Grundkörper 3 ist aus Metall, Glas oder Kunststoff hergestellt. Vorzugsweise besteht er aus nichtrostendem Stahl, wobei der Grundkörper 3 dann vorzugsweise mehrteilig ausgestaltet ist. Dies ermöglicht eine einfache Herstellung. Alternativ kann der Grundkörper 3 auch aus Glas hergestellt werden, wobei der Grundkörper 3 dann vorzugsweise einteilig ausgestaltet ist. Ein einteilig ausgestaltetes Ausführungsbeispiel ist in Figur 6 gezeigt. Es ist jedoch auch möglich, die verschiedenen Bereiche aus unterschiedlichen Materialien zu fertigen. Falls metallische Werkstoffe verwendet werden, eignet sich das Punktschweissverfahren besonders gut um die einzelnen Teile zu verbinden. Für andere Werkstoffe können andere Verfahren verwendet werden.

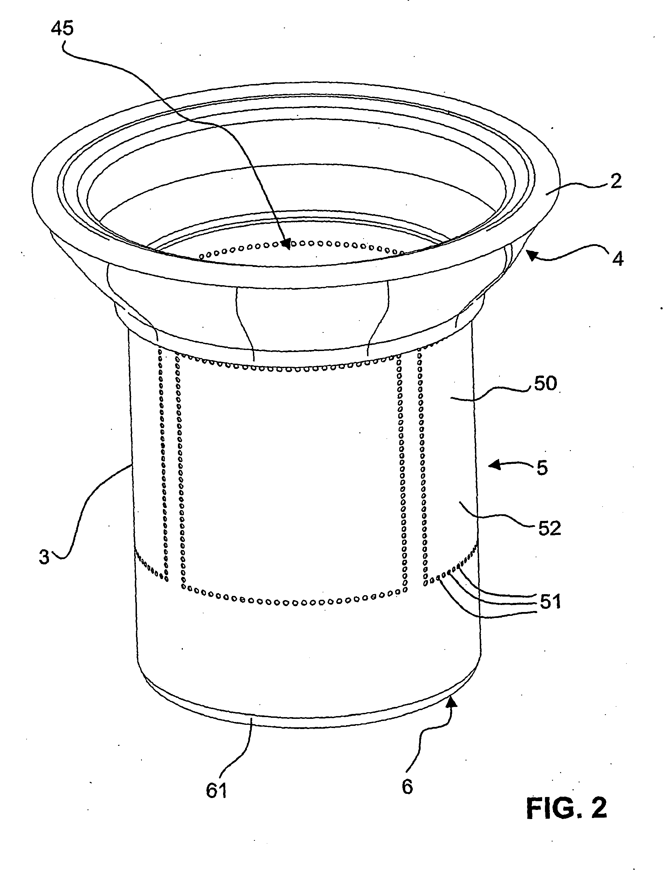

In Figur 2 ist eine Eingiessöffnung 45 besonders gut erkennbar. Durch diese Eingiessöffnung 45 wird eine heisse Flüssigkeit, beispielsweise heisses Wasser auf das in dem Filterelement befindliche Pulver gegossen. Das Pulver kann sowohl Kaffee oder Tee sein. Alternativ können natürlich auch geschnittene Teeblätter oder andere Formen verwendet werden.

Der Filterbereich 5 ist im wesentlichen ein hohlzylindrischer Filterkörper 50, hier wird auf die Figuren 1 bis 4 verwiesen. Die Filteröffnungen 51 sind in Öffnungsreihen angeordnet und durchdringen die Mantelfläche des Filterkörper 50, wobei eine Öffnungsreihe eine Vielzahl von Filteröffnungen 51 aufweist. Mehrere vorzugsweise parallel verlaufende öffnungsreihen bilden Öffnungsfelder 52. Zu Gunsten der Übersichtlichkeit wurden in den Figuren jeweils nur die Filteröffnungen 51 dargestellt, welche ein solches Öffnungsfeld 52 umgeben. Vorzugsweise sind über den ganzen Umfang des Filterbereiches 5 vier solche Öffnungsfelder angeordnet. Alternativ können auch weniger, beispielsweise drei, oder mehr Öffnungsfelder angeordnet sein.

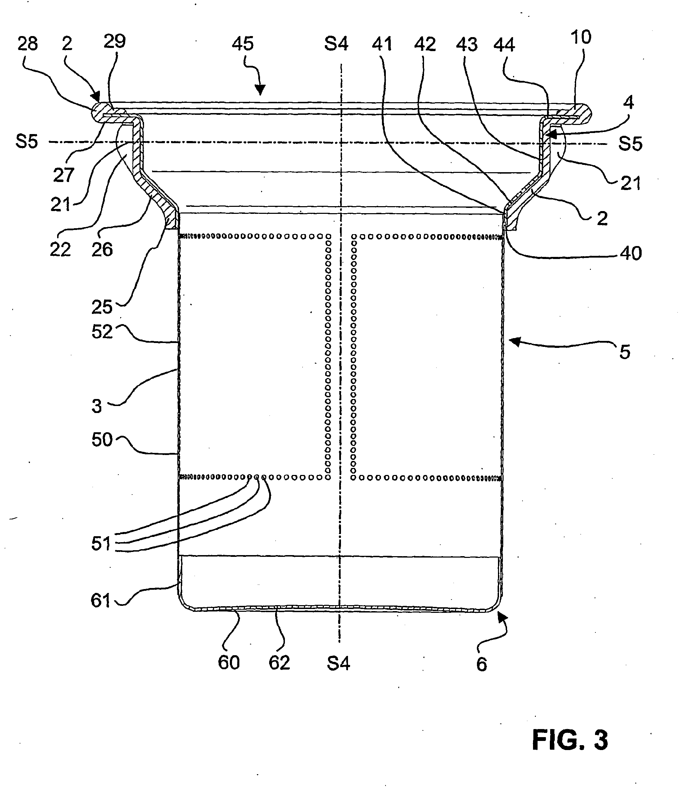

Der Bodenbereich 6 umfasst im wesentlichen eine Auffangschale 60. Die Auffangschale 60 weist einen Boden 62 (Figur 3) und eine senkrecht von dem Boden 62 abstehende Seitenwand 61 auf. Der Bodenbereich 6 ist über die Seitenwand 61 mit dem Filterbereich 5 wie oben beschrieben verbunden. Anstelle der Auffangschale 60 kann auch ein Boden verwendet werden, welcher im wesentlichen flach ausgestaltet ist. Das heisst, dass dieser flache Boden keine Seitenwand aufweist. Sowohl die Auffangschale 60 als auch der flache Boden können sowohl mit als auch ohne Öffnungen ausgestattet sein.

Der Auflagebereich 4 umfasst im wesentlichen einen Auflagekörper 40. Der Auflagekörper 40 beinhaltet einen zylindrischen Ring 41 (Figur 3), welcher über eine konische Seitenwand 42 in eine zylindrische Wand 43 übergeht. Die zylindrische Wand 43 geht dann in einen mindestens teilweise umlaufenden Ring 44 über, wobei der mindestens teilweise umlaufende Ring 44 vorzugsweise senkrecht von der zylindrischen Wand 43 absteht. Der umlaufende Ring 44 kann die zylindrische Wand 43 mindestens teilweise umlaufen, das heisst er ist dann in Abschnitten angeordnet, oder er kann die zylindrische Wand 43 aber auch vollständig umlaufen. Es ist zu beachten, dass die zylindrische Wand 43 einen grösseren Durchmesser als der zylindrische Ring 41 aufweist. Zudem weist der Aussendurchmesser des mindestens teilweise umlaufenden Ringes 44 einen grösseren Durchmesser als die zylindrische Wand 43 auf. Falls der Auflagekörper 40 aus einem metallischen Werkstoff ist, kann dieser beispielsweise durch ein Tiefziehverfahren hergestellt werden. Andere geeignete Verfahren sind ebenfalls denkbar.

Der zylindrische Filterkörper 50 und der Auflagekörper 40 werden vorzugsweise fest miteinander verbunden, wobei der Filterkörper 50 in den Auflagekörper 40 eingeführt wird. Zur Verbindung eignet sich das Punktschweissverfahren besonders gut. Andere Herstellungserfahren sind aber ebenfalls denkbar.

Ebenfalls ist in Figur 1 und in Figur 3 die Manschette 2 sehr gut erkennbar. Dabei ummantelt die Manschette 2 im wesentlichen die Aussenkontur des oberen Bereiches des Grundkörpers 3. Bevorzugterweise ummantelt die Manschette 2 die Aussenseite des Auflagekörpers 40.

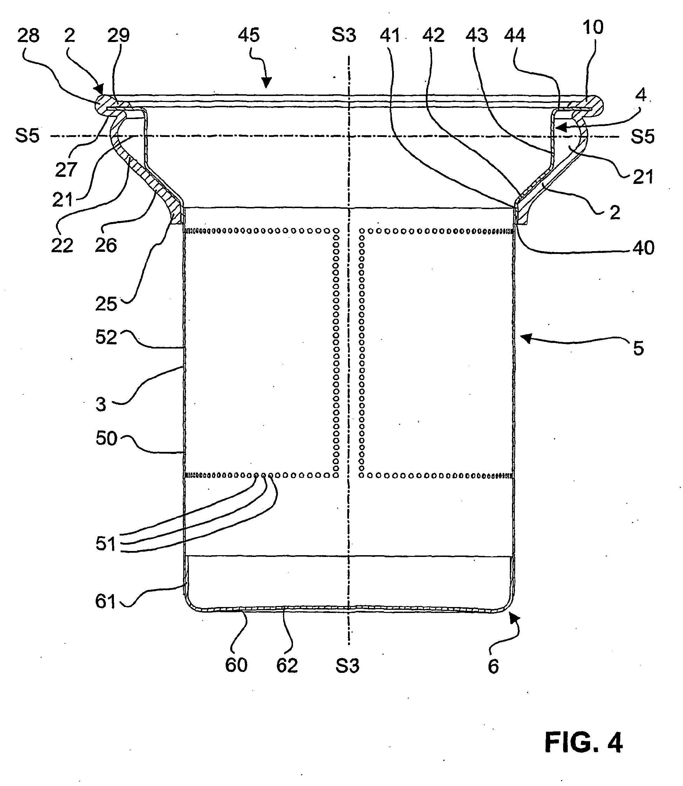

In den Figuren 3 und 4 ist die Manschette 2 detailliert dargestellt. Die Manschette 2 ist einem unteren Bereich als zylindrischer Ring 25 ausgestaltet. Über einen konischen Übergang 26 geht dann der zylindrische Ring 25 in eine wellenförmige Aussenkontur 21 über. Der Umfang der Manschette 2 verjüngt sich also in einem unteren Bereich. Die wellenförmige Aussenkontur 21 erstreckt sich dabei mindestens teilweise über einen Umfangsbereich der Manschette 2. Der wellenförmigen Aussenkontur 21 ist ein Auflagering 27 angeformt, der nach aussen absteht. Ein Wulst 28 bildet den Abschluss des Auflagerings 27. Am Wulst 28 ist zudem ein Deckring 29 angeformt, welcher sich im wesentlichen parallel zum Auflagering 27 nach innen erstreckt, wobei zwischen dem Auflagering 27 und dem Deckring 29 ein ringförmiger Zwischenraum entsteht. Der Auflagering 27, der Wulst 28 und der Deckring 29 Bilden eine Isolierummantelung, welche in Figur 1 mit der Bezugsziffer 24 bezeichnet ist.

Die Manschette 2 ist elastisch ausgestaltet.

Die Manschette wird aus einem Kunststoff hergestellt, welcher flexibel und hitzebeständig ist. Gute Resultate wurden mit Silikongummi oder einem Kunststoff, der als Santopren auf dem Markt bekannt ist, erzielt. Zudem ist die Manschette 2 vorzugsweise einstückig ausgestaltet.

Die Manschette 2 kann von Hand über den Auflagekörper 40 gestülpt werden. In den Figuren 3 und 4 kann zudem erkannt werden, dass die Manschette 2 in einigen Bereichen satt auf dem Auflagebereich 4 bzw. auf den Auflagekörper 40 anliegt. Vorzugsweise ist der zylindrische Ring 41, die konische Seitenwand 42 und die zylindrische Wand 43 des Grundkörpers auf deren Aussenseite von der Manschette 2 umgeben. Zudem ist der mindestens teilweise umlaufende Ring 44 des Auflagekörpers 40 fast vollständig von der Manschette 2 umgeben, wobei dieser mindestens teilweise umlaufende Ring 44 in den ringförmigen Zwischenraum der Manschette 2 eingreift. Das heisst, dass sich die Manschette 2 mit einem oberen Bereich mindestens über einen Teil eines äusseren Randes dieses Rings 44 erstreckt. Der Umfangsbereich mit der wellenförmigen Aussenkontur 21 ist unterhalb dieses oberen Bereiches angeordnet.

Im Bereich des mindestens teilweise umlaufenden Ringes 44 dient die Manschette 2 zur Wärmeisolation, denn durch das Eingiessen einer heissen Flüssigkeit erwärmt sich der Grundkörper 3. Durch die Umhüllung des mindestens teilweise umlaufenden Ringes 44 mit der Manschette 2 hat der Benutzer die Möglichkeit, den Filtereinsatz 1 mit blossen Händen zu entfernen. Er benötigt keine Hilfsmittel, wie beispielsweise einen Lappen oder ähnliches. Durch den Wulst 28 wird die Wirksamkeit der Wärmeisolation der elastischen Manschette 2 noch verstärkt.

In einem weiteren Ausführungsbeispiel kann die Manschette 2 fest mit dem oberen Bereich des Grundkörpers 3 verbunden sein. Beispielsweise kann die Manschette 2 mit einem Klebstoff gegen unbeabsichtigtes Entfernen gesichert sein. Es ist aber auch möglich, eine Manschette so anzubringen, dass diese vom Benutzer problemlos entfernt werden kann. Dies ist besonders vorteilhaft, da eine einfache Reinigung ermöglicht wird.

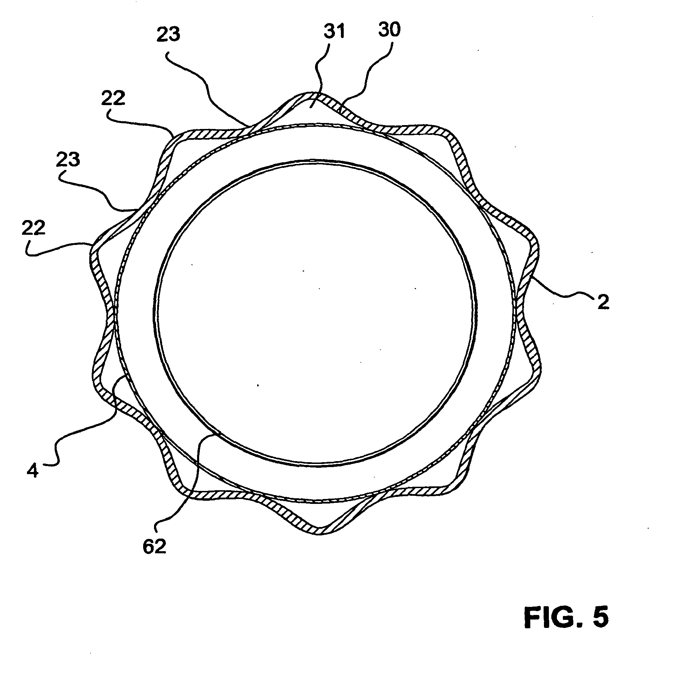

Die wellenförmige Aussenkontur 21 ist besonders gut in Figur 5 erkennbar, welche eine Schnittdarstellung entlang der Linie S5-S5 von Figur 3 und 4 ist. Die wellenförmige Aussenkontur kann in einem Schnitt, welcher parallel zu einem Auflagering 27 verläuft, als rosettenartig um die Manschette verlaufend beschrieben werden. Die wellenförmige Aussenkontur 21 umfasst Erhöhungen 22 und Vertiefungen 23 und erstreckt sich vorzugsweise um den ganzen Umfang der Manschette 2. In diesem bevorzugten Ausführungsbeispiel sind zehn Erhöhungen 22 und zehn Vertiefungen 23 in regelmässigen Abständen über den gesamten Umfang der elastischen Manschette 2 angeordnet. Die wellenförmige Aussenkontur 21 verläuft im wesentlichen senkrecht zu einer Auflageebene, welche parallel zum mindestens teilweise umlaufenden Ring 44 ist. In anderen Worten: Die wellenförmige Aussenkontur 21 verläuft auf einer Mantelfläche eines Zylinders in Richtung dessen Mittelachse. Die Dicke der wellenförmige Aussenkontur 21 ist vorzugsweise variabel. Insbesondere weist die Dicke der wellenförmigen Aussenkontur 21 bei den Erhöhungen 22 ein kleineres Mass als bei den Vertiefungen 23 auf. Dies führt zu einer elastischeren wellenförmigen Aussenkontur 21. In weiteren Ausführungsformen kann die Dicke zudem konstant sein.

Ebenfalls kann in Figur 5 erkennt werden, dass die Manschette 2 eine ebenfalls wellenförmige Innenkontur 30 aufweist. Die wellenförmige Innenkontur 30 liegt dabei mindestens teilweise auf dem Auflagebereich 4 auf. Vorzugsweise bilden sich zwischen der wellenförmigen Innenkontur 30 und dem Auflagebereich 4 Zwischenräume 31. Vorzugsweise sind die Zwischenräume 31 mit einem gasförmigen Medium ausgefüllt, wobei das gasförmige Medium Umgebungsluft sein kann. In einer weiteren nicht gezeigten Ausführungsform können die Zwischenräume 31 aber auch mit einem festen Medium ausgefüllt sein. Hier wird vorzugsweise ein Kunststoff eingesetzt, der ähnliche Materialeigenschaften wie die Manschette 2 aufweist.

Bei allen Ausführungsbeispielen der Manschette 2 ist demnach gemeinsam, dass diese im Bereich der wellenförmigen Kontur 21 eine Kontur aufweisen müssen, welche verformbar ist. Die verformbare Kontur, also im wesentlichen die wellenförmige Aussenkontur 21, muss sich beim Einsetzen in das Gefäss 9 an ein Innenmass der Einsatzöffnung 91 des Gefässes 9 flexibel anpassen können und zwar so, dass die Einsatzöffnung 91 des Gefässes 9 von der wellenförmigen Aussenkontur 21 der Manschette 2 abschnittsweise berührt wird. Zwischen den einzelnen Abschnitten liegen dann weitere Abschnitte, bei welchen die Einsatzöffnung 91 von der Manschette 2 nicht berührt wird. Dies erlaubt dann, dass Luft in das Gefäss 9 einströmen kann.

Durch die beschriebene flexible Verformung wird ein Kraftschluss oder Reibschluss zwischen der elastischen Manschette 2 bzw. dem Filtereinsatz 1 und dem Gefäss 9 erzielt. Dabei wird verhindert, dass der Filtereinsatz 1 bei der Entnahme des Getränks, also wenn das Gefäss 9 zum Einschenken des Getränkes zu beispielsweise einer Tasse hin geschwenkt wird, heraus fallen kann.

In einer weiteren nicht gezeigten Ausführungsform ist es zudem denkbar, dass der Auflagebereich 4 so ausgestaltet wird, dass dieser kleinere Abmessungen als die Einsatzöffnung 91 des Gefässes 9 aufweist. Dabei wird dann der Filtereinsatz 1 nur durch die Manschette 2 gelagert. Das heisst der Flansch 10 umfasst dann nur noch Elemente der Manschette 2.

In einem weiteren nicht dargestellten Ausführungsbeispiel weist der Auflagebereich 4 eine zum Filterbereich 5 äquivalente Grundfläche auf. Das heisst der Auflagebereich 4 und der Filterbereich 5 sind dann vorzugsweise zylinderförmig. Die Manschette 2 weist dann ebenfalls eine zylindrische Innenöffnung auf. Die Aussenkontur der Manschette 2 stimmt mit der in den vorherigen Ausführungsbeispielen beschrieben Formen überein. Die Manschette 2 kann hier mit einem Klebstoff am Grundkörper 3 befestigt werden. Alternativ ist es aber auch möglich, den Innendruchmesser der Manschette 2 so zu Formen, dass sich diese beim Aufziehen auf den zylindrischen Auflagebereich 4 ausdehnen muss. Im aufgezogenen Zustand wirkt sich dies dann positiv aus, denn die Manschette kann sich nicht wieder zusammenziehen. Dies bewirkt günstige Kräfteverhältnisse, insbesondere wird die Reibkraft zwischen Manschette 2 und Auflagebereich 4 erhöht, was ein Abrutschen der Manschette verhindert. In diesem Ausführungsbeispiel wird der Flansch 10 nur von Teilen der Manschette 2 gebildet.

In der vorliegenden Beschreibung wurde davon ausgegangen, dass der Grundkörper 3 im wesentlichen hohlzylinderförmig ausgestaltet ist. Der Grundkörper 3 weist demnach eine runde Querschnittsform auf. Es ist aber klar, dass der Grundkörper 3 beliebige Querschnittsformen aufweisen kann. Die Querschnittsform sollte in diesem Abschnitt, welcher im eingesetzten Zustand, auf die Einsatzöffnung des Gefässes 9 trifft, entsprechend der Form dieser Einsatzöffnung 91 ausgestaltet sein. Beispielsweise kann eine ovale, polygonartige oder aber auch eine eckige Form verwendet werden. Zudem kann ein Grundkörper 3 verschiedene Querschnittsformen aufweisen. Besonders bevorzugt werden beispielsweise Grundkörper, die runde Querschnittsformen aufweisen, wobei die runden Querschnittsformen unterschiedlichen Durchmesser haben, so dass eine konische Form entsteht.

Wahlweise kann der beschriebene Filtereinsatz 1 zudem mit einem Stempel, wie dieser beispielsweise aus der WO 92/13475 bekannt ist, verwendet werden.

Figur 6 zeigt eine weitere beispielhafte Ausführungsform eines Filterelementes gemäss der vorliegenden Erfindung. In diesem Ausführungsbeispiel weist der Grundkörper 3 im Auflagebereich 7 eine zu der oben beschrieben Form unterschiedliche Form auf. Über einen konisch ausgestalteten Übergang 71 geht der zylindrische Grundkörper 3 in einen grösseren Querschnitt 72 über. An diesem grösseren Querschnitt 72 ist ein konisch zulaufender Übergang 73 angeformt, der zugleich den Abschluss 74 des Filterelementes bildet. Die Manschette 2 ist bei dieser Ausführungsform an ähnlicher Stelle wie oben schon beschrieben angeordnet. Dabei ist die Manschette 2 so ausgestaltet, dass deren Innenkontur der Aussenkontur des Auflagebereiches folgt. Auch hier weist die Manschette 2 eine wellenförmige Aussenkontur 21 auf. Figur 6 zeigt besonders gut, wie die wellenförmige Aussenkontur 21 an unterschiedlich ausgestaltete Einsatzöffnungen 91 anpassbar ist. So wird in diesen Ausführungsbeispiel die wellenförmige Aussenkontur 21 beim Einsetzen des Filtereinsatzes 1 in das Gefäss 9 in einem ersten Schritt zusammengedrückt, so dass der Filtereinsatz 1 eingeschoben werden kann. Ist der Filtereinsatz 1 dann so weit eingeschoben, dass die Manschette 2 auf dem Öffnungsumfang 92 aufliegt, entspannt sich die wellenförmige Aussenkontur soweit, bis diese an einer Innenwand 93 ansteht. In diesem Ausführungsbeispiel ist es zudem denkbar, dass die wellenförmige Aussenkontur 21 mindestens drei Erhöhungen 22 aufweist, wobei diese beabstandet am Umfang der Manschette 2 angeordnet sind. Vorteilhafterweise sind aber mehr Erhöhungen und Vertiefungen über den Umfang der Manschette angeordnet.

### Bezugszeichenliste

- 1: Filtereinsatz
- 2: Manschette
- 3: Grundkörper
- 4: Auflagebereich
- 5: Filterbereich
- 6: Bodenbereich
- 7: Auflagebereich
- 9: Gefäss

- 10: Flansch

- 21: Wellenförmige Aussenkontur
- 22: Erhöhung
- 23: Vertiefung
- 24: Isolierummantelung
- 25: zylindrischer Ring
- 26: konischer Übergang
- 27: Auflagering
- 28: Wulst
- 29: Deckring
- 30: Wellenförmige Innenkontur
- 40: Auflagekörper
- 41: zylindrischer Ring
- 42: konische Seitenwand
- 43: zylindrische Wand
- 44: teilweise umlaufender Ring
- 45: Eingiessöffnung

- 50: zylindrischer Filterkörper
- 51: Filteröffnung
- 52: Öffnungsfelder

- 60: Auffangschale
- 61: Seitenwand
- 62: Boden

- 71: konischer Übergang
- 72: grosser Querschnitt
- 73: konischer Übergang
- 74: Abschluss

- 90: Henkel
- 91: Einsatzöffnung
- 92: Öffnungsumfang

## Patentansprüche

1. Filtereinsatz (1) zum Einsetzen in eine Einsatzöffnung (91) eines Gefässes (9) zwecks Extraktion von Getränken, wobei der Filtereinsatz (1) aufweist:
• einen hohlen Grundkörper (3) zur Aufnahme von Kaffeepulver, Teeblättern oder dergleichen, welcher mit Filteröffnungen (51) versehen ist, und
• eine die Aussenkontur eines oberen Bereichs des Grundkörpers (4) ummantelnde, elastische Manschette (2) aus einem flexiblen und hitzebeständigen Kunststoff zur flexiblen Anpassung an ein Innenmass der Einsatzöffnung (91) des Gefässes (9),
**dadurch gekennzeichnet, dass** die Manschette (2) eine elastische wellenförmige Aussenkontur (21) aufweist, die rosettenartig mit Erhöhungen und Vertiefungen entlang der Umfangsrichtung verläuft.

2. Filtereinsatz nach Anspruch 1, wobei der Filtereinsatz einen mindestens teilweise umlaufenden Flansch (10) aufweist, um den Filtereinsatz (1) im eingesetzten Zustand in der Einsatzöffnung (91) zu halten, und wobei ein oberer Bereich der Manschette (2) Teil dieses Flansches (10) ist.

3. Filtereinsatz nach Anspruch 2, wobei der Flansch (10) einen mindestens teilweise umlaufenden Ring (44) aufweist und wobei die Manschette (2) einen oberen Bereich aufweist, welcher sich über mindestens einen Teil eines äusseren Randes dieses Rings (44) erstreckt und wobei der Umfangsbereich mit der wellenförmigen Aussenkontur (21) unterhalb dieses oberen Bereichs angeordnet ist.

4. Filtereinsatz nach einem der vorhergehenden Ansprüche, wobei die Manschette (2) einstückig ausgestaltet ist.

5. Filtereinsatz nach einem der vorhergehenden Ansprüche, wobei sich der Umfang der Manschette (2) in einem unteren Bereich verjüngt.

6. Filtereinsatz nach einem der vorhergehenden Ansprüche, wobei sich die wellenförmige Aussenkontur (21) um den ganzen Umfang der Manschette (2) erstreckt.

7. Filtereinsatz nach einem der vorhergehenden Ansprüche, wobei die Manschette (2) mit dem oberen Bereich des Grundkörpers (3) fest verbunden ist.

8. Filtereinsatz nach einem der vorhergehenden Ansprüche, wobei die Manschette (2) vom Grundkörper (3) entfernbar angeordnet ist.

9. Filtereinsatz nach einem der vorhergehenden Ansprüche, wobei die Manschette (2) aus Silikongummi hergestellt ist.

10. Filtereinsatz nach einem der vorhergehenden Ansprüche, wobei der Grundkörper (3) aus Metall, Glas, Kunststoff oder Kombinationen davon hergestellt ist.

11. Filtereinsatz nach einem der vorhergehenden Ansprüche, wobei die Manschette eine wellenförmige Innenkontur (30) aufweist, die teilweise auf einem Auflagebereich (4) des Grundkörpers aufliegt, und wobei zwischen der wellenförmigen Innenkontur (30) und dem Auflagebereich (4) Zwischenräume (31) ausgebildet sind.

12. Gefäss (9) mit einem Filtereinsatz gemäss einem der Ansprüche 1 bis 11, wobei die wellenförmige Aussenkontur (21) mit der Einsatzöffnung (91) des Gefässes (9) mindestens teilweise einen Kraftschluss eingeht.

13. Gefäss nach Anspruch 12, wobei die wellenförmige Aussenkontur Erhöhungen und Vertiefungen aufweist, und wobei der Durchmesser, welcher von einer ersten Erhöhung (22) zu einer zweiten gegenüberliegenden Erhöhung (22) gemessen wird, ein grösseres Mass aufweist als der Durchmesser der Einsatzöffnung (91) des Gefässes.

14. Gefäss nach einem der Ansprüche 12 oder 13, wobei es zur Zubereitung von heissen Getränken, insbesondere von Tee oder Kaffee, verwendbar ist.

## Claims

1. A filter insert (1) for inserting into an insertion opening (91) of a vessel (9) for the purpose of extraction of beverages, the filter insert (1) comprising:
• a hollow main body (3) for receiving coffee powder, tea leaves or the like, the main body being provided with filtering holes (51), and
• an elastic sleeve (2) covering the outside contour of an upper region of the main body (4) and made of a flexible and heat-resistant plastic, for flexible adaptation to an inside dimension of the insertion opening (91) of the vessel (9),
**characterized in that** the sleeve (2) has an elastic wave-form outside contour (21) extending along the circumferential direction like a rosette with crests and troughs.

2. The filter insert as claimed in claim 1, the filter insert comprising an at least partially surrounding flange (10) in order to hold the filter insert (1) in the inserted state in the insertion opening (91), an upper region of the sleeve (2) being part of this flange (10).

3. The filter insert as claimed in claim 2, wherein the flange (10) comprises an at least partially surrounding ring (44), wherein the sleeve (2) comprises an upper region which extends over at least a part of an outer edge of this ring (44), and wherein the circumferential region with the wave-form outside contour (21) is located beneath this upper region.

4. The filter insert as claimed in any of the preceding claims, wherein the sleeve (2) is made in one piece.

5. The filter insert as claimed in any of the preceding claims, wherein the circumference of the sleeve (2) tapers in a lower region.

6. The filter insert as claimed in any of the preceding claims, wherein the wave-form outside contour (21) extends around the entire circumference of the sleeve (2).

7. The filter insert as claimed in any of the preceding claims, wherein the sleeve (2) is connected to the upper region of the main body (3) in a fixed manner.

8. The filter insert as claimed in any of the preceding claims, wherein the sleeve (2) is removable from the main body (3).

9. The filter insert as claimed in any of the preceding claims, wherein the sleeve (2) is made of silicone rubber.

10. The filter insert as claimed in any of the preceding claims, wherein the main body (3) is made of metal, glass, plastic or combinations thereof.

11. The filter insert as claimed in any of the preceding claims, wherein the sleeve has a wave-form inside contour (30) which lies partially on a support section (4) of the main body, and wherein gaps (31) are formed between the wave-form inside contour (30) and the support section (4).

12. A vessel (9) with a filter insert as claimed in any of claims 1 to 11, wherein the wave-form outside contour (21) is in an at least partially non-positive locking engagement with the insertion opening (91) of the vessel (9).

13. The vessel as claimed in claim 12, wherein the wave-form outside contour has crests and troughs, and wherein the diameter, which is measured from a first crest (22) to a second opposite crest (22), has a larger dimension than the diameter of the insertion opening (91) of the vessel.

14. The vessel as claimed in either of claims 12 or 13, the vessel being adapted for the preparation of hot beverages, especially of tea or coffee.

## Revendications

1. Garniture de filtre (1) pour l'insertion dans une ouverture d'insertion (91) d'un récipient (9) en vue de l'extraction de boissons, dans lequel la garniture de filtre (1) présente :
- un corps de base creux (3) pour recevoir de la poudre de café, des feuilles de thé ou similaires, qui est pourvu d'ouvertures de filtre (51), et
- un manchon élastique (2) enveloppant le contour extérieur d'une région supérieure du corps de base (4), en plastique flexible et résistant à la chaleur, pour l'adaptation flexible à une dimension intérieure de l'ouverture d'insertion (91) du récipient (9),
**caractérisée en ce que** le manchon (2) présente un contour extérieur élastique de forme ondulée (21), qui s'étend en forme de rosette avec des rehaussements et des renfoncements le long de la direction périphérique.

2. Garniture de filtre selon la revendication 1, dans laquelle la garniture de filtre présente une bride (10) au moins partiellement périphérique, afin de retenir la garniture de filtre (1) dans l'état inséré dans l'ouverture d'insertion (91), et dans laquelle une région supérieure du manchon (2) fait partie de cette bride (10).

3. Garniture de filtre selon la revendication 2, dans laquelle la bride (10) présente une bague (44) au moins partiellement périphérique et dans laquelle le manchon (2) présente une région supérieure qui s'étend sur au moins une partie d'un bord extérieur de cette bague (44) et dans laquelle la région périphérique est disposée avec le contour extérieur de forme ondulée (21) en dessous de cette région supérieure.

4. Garniture de filtre selon l'une quelconque des revendications précédentes, dans laquelle le manchon (2) est réalisé d'une seule pièce.

5. Garniture de filtre selon l'une quelconque des revendications précédentes, dans laquelle la périphérie du manchon (2) se rétrécit dans une région inférieure.

6. Garniture de filtre selon l'une quelconque des revendications précédentes, dans laquelle le contour extérieur de forme ondulée (21) s'étend autour de toute la périphérie du manchon (2).

7. Garniture de filtre selon l'une quelconque des revendications précédentes, dans laquelle le manchon (2) est connecté fixement à la région supérieure du corps de base (3).

8. Garniture de filtre selon l'une quelconque des revendications précédentes, dans laquelle le manchon (2) est disposé de manière à pouvoir être enlevé du corps de base (3).

9. Garniture de filtre selon l'une quelconque des revendications précédentes, dans laquelle le manchon (2) est fabriqué en caoutchouc siliconé.

10. Garniture de filtre selon l'une quelconque des revendications précédentes, dans laquelle le corps de base (3) est fabriqué en métal, en verre, en plastique ou en des combinaisons de ces matériaux.

11. Garniture de filtre selon l'une quelconque des revendications précédentes, dans laquelle le manchon présente un contour interne de forme ondulée (30), qui s'applique en partie sur une région d'appui (4) du corps de base, et dans laquelle des espaces intermédiaires (31) sont réalisés entre le contour interne de forme ondulée (30) et la région d'appui (4).

12. Récipient (9) comprenant une garniture de filtre selon l'une quelconque des revendications 1 à 11, dans lequel le contour extérieur de forme ondulée (21) forme avec l'ouverture d'insertion (91) du récipient (9) au moins en partie un engagement par force.

13. Récipient selon la revendication 12, dans lequel le contour extérieur de forme ondulée présente des rehaussements et des renfoncements, et dans lequel le diamètre qui est mesuré depuis un premier rehaussement (22) jusqu'à un deuxième rehaussement opposé (22), présente une plus grande dimension que le diamètre de l'ouverture d'insertion (91) du récipient.

14. Récipient selon l'une quelconque des revendications 12 ou 13, qui peut être utilisé pour la préparation de boissons chaudes, notamment de thé ou de café.
